# EUROPEAN PATENT APPLICATION

(11) **EP 4 644 324 A1**
(43) Date of publication of application: **05.11.2025**
(21) Application number: 23912986.9
(22) Date of filing: 28.12.2023
(51) Int. Cl.: C01B 33/02, C01B 32/05, H01M 4/38, H01M 4/36, H01M 4/02

(54) **YOLK-SHELL-STRUCTURED SILICON-CARBON COMPOSITE, PREPARATION METHOD THEREFOR, AND ANODE ACTIVE MATERIAL COMPRISING SAME**

(30) Priority: 29.12.2022 KR 20220188906
(71) Applicant: Hanwha Solutions Corporation, Jung-gu Seoul 04541 (KR); Korea Advanced Institute of Science and Technology, Daejeon 34141 (KR)
(72) Inventor: KIM, Do Heung, Seoul 04541 (KR); JEON, HyoJin, Seoul 04541 (KR); KIM, Eui Duk, Seoul 04541 (KR); PARK, Sarang, Seoul 04541 (KR); IM, Sung Gap, Daejeon 34141 (KR); JANG, Wontae, Daejeon 34141 (KR); CHOI, Keonwoo, Daejeon 34141 (KR); KANG, Minjeong, Daejeon 34141 (KR)
(74) Representative: Berggren Oy
(86) International application number: PCT/KR2023/021871
(87) International publication number: WO 2024/144312

(57) **Abstract**

The present invention relates to a yolk-shell-structured silicon-carbon composite, a preparation method therefor, and an anode active material comprising same. The yolk-shell-structured silicon-carbon composite according to an embodiment of the present invention can be prepared without using strong acids, and can have uniform voids formed using, as a sacrificial layer, an inorganic layer with uniform thickness so as to accommodate, when used as an anode active material , silicon volume expansion, and thus can suppress peeling off, caused thereby, of the outermost carbon thin film. As a result, deterioration in battery performance and lifespan can be suppressed.

## Description

### TECHNICAL FIELD

The present invention relates to a yolk-shell-structured silicon-carbon composite, and more particularly, to a yolk-shell-structured silicon-carbon composite, a preparation method therefor, and an anode active material comprising the same.

### BACKGROUND

With the recent advancement of the information and communication industry, the demand for electronic devices has surged, and as the electric vehicle market has rapidly expanded, the demand for batteries used in these electronic devices and electric vehicles has also increased together.

Secondary batteries, such as lithium secondary batteries containing a liquid electrolyte and all-solid-state batteries, are most widely used for such applications because they have high energy density and exhibit a low degree of self-discharge when not in use. Secondary batteries are generally composed of a cathode, an anode, and an electrolyte (either liquid or solid), and carbon materials such as graphite are widely used as anode active materials in secondary batteries.

Recently, efforts have been made to use silicon-based anode active materials in order to improve the capacity of secondary batteries. Silicon is attracting attention as a next-generation battery anode active material to replace graphite due to its theoretically high energy density. However, during charge and discharge, it reacts with lithium and undergoes a volume expansion of up to approximately 300%, resulting in a significant decrease in mechanical stability, such as the fracturing of the silicon anode active material as the charge-discharge cycles progress.

To address this issue, a silicon-carbon composite having a yolk-shell structure has been proposed, in which porous silicon particles with internal voids are employed to accommodate the volume expansion of silicon, and a carbon thin film is formed on the surface of the particles. To prepare this composite, it is necessary to coat an inorganic material on the surface of the silicon particles serving as the yolk, and then etch the coated layer using a strong acid such as hydrofluoric acid.

Accordingly, there is a need to develop a new material that can be used as a sacrificial layer in a more environmentally friendly and simpler manner.

### DISCLOSURE

### TECHNICAL PROBLEM

The present invention is directed to providing a yolk-shell-structured silicon-carbon composite capable of suppressing deterioration in battery per formance caused by the volume expansion of silicon when used as an anode active material, by forming uniform voids using an inorganic layer with uniform thickness as a sacrificial layer.

The present invention is also directed to providing a method for efficiently preparing the above-described yolk-shell-structured silicon-carbon composite.

The present invention is also directed to providing an anode active material comprising the above-described yolk-shell-structured silicon-carbon composite.

### TECHNICAL SOLUTION

The present invention provides a method for preparing a yolk-shell-structured silicon-carbon composite, the method comprising: (1) supplying silicon particles into a reactor; (2) forming an inorganic layer on the silicon particles by atomic layer deposition (ALD) to prepare a silicon-inorganic layer composite; (3) forming a carbon thin film on the silicon-inorganic layer composite to obtain a silicon-inorganic layer-carbon composite; and (4) removing at least a portion of the inorganic layer from the silicon-inorganic layer-carbon composite to produce a yolk-shell-structured silicon-carbon composite.

According to an embodiment of the present invention, step (2) may include (2-1) supplying a first precursor into the reactor to form a first precursor multilayer in which at least a portion of the first precursor is adsorbed on the silicon particles; (2-2) purging the inside of the reactor to remove unadsorbed first precursor from the first precursor multilayer to form a first precursor monolayer; (2-3) supplying a second precursor into the reactor to react at least a portion of the second precursor with the first precursor monolayer to form a composite layer; and (2-4) purging the inside of the reactor to remove unreacted second precursor from the composite layer, thereby forming an inorganic layer, wherein steps (2-1) to (2-4) constitute one cycle, and the cycle may be performed one or more times.

In addition, the supply time of the first precursor and the supply time of the second precursor may be each independently from 1 to 600 seconds.

In addition, the first precursor may include at least one selected from the group consisting of trimethylaluminum, diethylzinc, zinc acetate, tetrakis(dimethylamino)tin(IV), butoxytris(ethylmethylamido)hafnium, titanium isopropoxide, and diisopropylaminosilane.

In addition, the second precursor may include at least one selected from the group consisting of H₂O, O₃, H₂O plasma, O₃ plasma, and O₂ plasma.

In addition, the gas used for purging in at least one of steps (2-2) and (2-4) may include nitrogen (N₂) or argon (Ar).

In addition, the cycle may be performed 1 to 300 cycles.

In addition, the temperature of the silicon particles may be maintained at 90 to 400°C during the cycle.

In addition, step (4) may be performed by etching the inorganic layer from the silicon-inorganic layer-carbon composite.

In addition, the present invention provides a yolk-shell-structured silicon-carbon composite, comprising silicon particles; and a carbon thin film formed on the silicon particles with a predetermined void therebetween.

According to an embodiment of the present invention, the silicon particles may have an average particle diameter of 10 nm to 50 µm, and the carbon thin film may have an average thickness of 1 nm to 1 µm.

In addition, the yolk-shell-structured silicon-carbon composite may have a porosity of 10 to 80%.

In addition, the present invention provides an anode active material comprising the above-described yolk-shell-structured silicon-carbon composite.

In addition, the present invention provides an all-solid-state battery comprising an SEI (Solid Electrolyte Interphase) layer including the above-described yolk-shell-structured silicon-carbon composite.

### ADVANTAGEOUS EFFECT

The yolk-shell-structured silicon-carbon composite according to an embodiment of the present invention is manufactured based on an inorganic layer formed using atomic layer deposition, which enables fine control of the thickness of the sacrificial layer. In addition, by utilizing an inorganic layer with a uniform thickness as a sacrificial layer to form uniform voids, the yolk-shell-structured silicon-carbon composite can accommodate the volume expansion of silicon when used as an anode active material, thereby suppressing the peeling of the outermost carbon thin film caused by such expansion. As a result, deterioration in battery performance and lifespan can be suppressed.

### BRIEF DESCRIPTION OF THE DRAWINGS

FIG. 1 is a transmission electron microscope (TEM) image of a silicon-inorganic layer composite, which is an intermediate of a silicon-carbon composite (Example 1) according to an embodiment of the present invention.
FIG. 2 is a transmission electron microscope-energy dispersive spectrometer (TEM-EDS) image of a silicon-inorganic layer composite, which is an intermediate of a silicon-carbon composite (Example 1) according to an embodiment of the present invention.
FIG. 3 is a transmission electron microscope (TEM) image of a silicon-inorganic layer-carbon composite, which is an intermediate of a silicon-carbon composite (Example 1) according to an embodiment of the present invention.
FIG. 4 is a TEM-EDS image of a silicon-inorganic layer-carbon composite, which is an intermediate of a silicon-carbon composite (Example 1) according to an embodiment of the present invention.
FIG. 5 is a TEM image of a silicon-carbon composite (Example 1) according to an embodiment of the present invention.
FIG. 6 is a TEM-EDS image of a silicon-carbon composite (Example 1) according to an embodiment of the present invention.
FIG. 7 is an atomic distribution graph image of a silicon-carbon composite (Example 1) according to an embodiment of the present invention.
FIG. 8 is a TEM image of a silicon-inorganic layer composite, which is an intermediate of a silicon-carbon composite (Example 2) according to an embodiment of the present invention.

### BEST MODES FOR CARRYING OUT THE INVENTION

The present invention is not limited to the embodiments disclosed below, and may be modified in various forms as long as the spirit of the invention is not altered.

In the present specification, the terms "comprise" or "include" mean that other components may be further included unless otherwise specified.

Unless otherwise specified, all numerical values and expressions indicating the amounts of components, reaction conditions, and the like described in the present specification are to be understood as being modified by the term "about" in all instances.

In the present specification, when one component is described as being formed on, under, connected to, or coupled with another component, such descriptions are intended to include both direct formation, connection, or coupling between the components and indirect formation, connection, or coupling via another component.

Hereinafter, the present invention will be described in more detail.

### Yolk-shell-structured silicon-carbon composite

The present invention provides a yolk-shell-structured silicon-carbon composite. The yolk-shell-structured silicon-carbon composite is implemented to include silicon particles and a carbon thin film formed on the silicon particles with a predetermined void therebetween.

The yolk-shell-structured silicon-carbon composite according to an embodiment of the present invention is obtained using, as intermediates, a silicon-inorganic layer composite including silicon particles and an inorganic layer formed on the silicon particles, and a silicon-inorganic layer-carbon composite including a carbon thin film formed on the silicon-inorganic layer composite.

Accordingly, the yolk-shell-structured silicon-carbon composite according to an embodiment of the present invention will be described below with reference to the intermediates: the silicon-inorganic layer composite and the silicon-inorganic layer-carbon composite.

### Silicon particles

In an embodiment of the present invention, the intermediates-the silicon-inorganic layer composite and the silicon-inorganic layer-carbon composite-and the final product, the yolk-shell-structured silicon-carbon composite, include silicon particles.

Since the silicon particles in the yolk-shell-structured silicon-carbon composite according to an embodiment of the present invention serve to store lithium, the silicon particles can function as a main anode active material when the yolk-shell-structured silicon-carbon composite according to an embodiment of the present invention is used as an anode active material.

The silicon particles may be crystalline or amorphous, and from the perspective of expansion/contraction during charge and discharge of a secondary battery and overall battery performance, they may be preferably amorphous or in a similar phase. When the silicon particles are crystalline, a smaller crystallite size allows for the formation of a denser composite, thereby enhancing the strength of the matrix and preventing cracking. Accordingly, the initial efficiency and cycle life characteristics of the secondary battery may be improved. Meanwhile, when the silicon particles are amorphous or in a similar phase, the expansion or contraction during charge and discharge of the secondary battery may be reduced, and battery performance such as capacity characteristics may be improved.

The size of the silicon particles may be selected to be suitable for the yolk-shell-structured silicon-carbon composite according to an embodiment of the present invent ion to be used as an anode active material. Specifically, the silicon particles may have an average particle diameter of 10 nm to 50 µm, and preferably 10 nm to 25 µm. As the silicon particles satisfy the above average particle diameter range, they may be more advantageous in achieving the objectives of the present invention.

The silicon particles may further include a silicon oxide compound. The silicon oxide compound may be represented by the general formula SiOx, where 0.5 ≤ x ≤ 2. Here, when the value of x is less than 0.5, expansion and contraction during charge and discharge of the secondary battery may become significant, leading to deterioration in lifespan characteristics. When x exceeds 2, the amount of inactive oxide increases, which may result in a decrease in the initial efficiency of the secondary battery.

The content of the silicon oxide compound in the silicon particles may be 50 wt% or less based on the total weight of the silicon particles. When the content of the silicon oxide compound in the silicon particles exceeds 50 wt%, the initial efficiency of the secondary battery may deteriorate.

The silicon particles may further include elements such as carbon or magnesium in addition to silicon and oxygen, but the silicon content in the silicon particles may be selected such that the total silicon content in the silicon-carbon composite is 1 to 80 wt%, and preferably 5 to 50 wt%. When the total silicon content in the silicon-carbon composite is less than 1 wt%, the amount of active material capable of absorbing and releasing lithium may be insufficient, which may lead to a reduction in the charge/discharge capacity of the secondary battery. When the total silicon content in the silicon-carbon composite exceeds 80 wt%, the charge/discharge capacity of the secondary battery may increase; however, the expansion and contraction of the electrode during charge and discharge may become excessive, and the anode active material powder may become further pulverized, which may lead to deterioration in the cycle characteristics of the secondary battery.

### Inorganic layer

In an embodiment of the present invention, the silicon-inorganic layer composite, which is an intermediate, includes an inorganic layer formed on the surface of the silicon particles. This inorganic layer is formed by an atomic layer deposition (ALD) process, which will be described later.

The inorganic layer is formed by ALD and serves as a sacrificial layer for forming the carbon thin film. As long as it can be sufficiently removed through an etching process, which will be described later, to enable the fabrication of the yolk-shell-structured silicon-carbon composite, the material of the inorganic layer is not particularly limited.

In a specific embodiment of the present invention, the inorganic layer may include at least one selected from the group consisting of aluminum oxide (Al₂O₃), zinc oxide (ZnO), tin oxide (SnO₂), hafnium oxide (HfO), zirconium oxide (ZrO₂), titanium oxide (TiO₂), and silicon oxide (SiO₂), but is not particularly limited thereto. In apreferred specific embodiment of the present invention, the inorganic layer may include aluminum oxide (Al₂O₃).

In a specific embodiment of the present invention, the thickness of the inorganic layer may be from 1 nm to 10 µm, preferably from 1 nm to 1 µm, and more preferably from 1 to 100 nm. When the thickness of the inorganic layer falls within this range, the inorganic layer can function properly as a sacrificial layer during the etching step, which will be described later, thereby allowing an appropriate void to be formed between the silicon particles and the carbon thin film.

In an embodiment of the present invention, the inorganic layer on the surface of the silicon particles in the silicon-inorganic layer composite as an intermediate may be at least partially removed, preferably in an amount of 10 to 100 wt%, and more preferably 50 to 100 wt%, during the etching step, which will be described later, thereby serving to appropriately form a void between the silicon particles and the carbon thin film.

Residues of the inorganic layer remaining after etching may be present between the silicon particles and the carbon thin film in the final product, the yolk-shell-structured silicon-carbon composite, according to an embodiment of the present invention. Accordingly, the yolk-shell-structured silicon-carbon composite according to an embodiment of the present invention may include residues of the inorganic layer between the silicon particles and the carbon thin film. However, the present invention is not limited thereto, and if the inorganic layer is completely removed by etching, the yolk-shell-structured silicon-carbon composite may not include any residues of the inorganic layer between the silicon particles and the carbon thin film.

### Carbon thin film

The yolk-shell-structured silicon-carbon composite according to an embodiment of the present invention includes a carbon thin film formed on the silicon particles.

By including the carbon thin film, the yolk-shell-structured silicon-carbon composite according to an embodiment of the present invention can ensure appropriate electrical conductivity and allow the specific surface area to be properly adjusted, thereby further improving the lifespan characteristics and capacity of the secondary battery when used as an anode active material.

The electrical conductivity of the anode active material is an important factor that facilitates electron transfer during electrochemical reactions. By including the carbon thin film, the yolk-shell-structured silicon-carbon composite according to an embodiment of the present invention can improve the charge/discharge capacity, initial charge efficiency, and capacity retention of a secondary battery, provide excellent electrical conductivity, suppress side reactions of the electrolyte, and further enhance the performance of the secondary battery.

In the yolk-shell-structured silicon-carbon composite according to an embodiment of the present invention, the thickness of the carbon thin film may be from 1 nm to 1 µm, preferably from 3 to 150 nm, and more preferably from 5 to 100 nm. When the thickness of the carbon thin film is within this range, it is possible to achieve an improvement in conductivity while suppressing a decrease in the capacity of the secondary battery.

The carbon thin film may include one or more selected from graphene, carbon nanotubes, carbon nanofibers, and graphite. Specifically, the carbon thin film may include graphene and may further include graphite, but is not particularly limited thereto.

### Void

In the yolk-shell-structured silicon-carbon composite according to an embodiment of the present invention, a void is present between the silicon particles and the carbon thin film.

As described above, in the silicon-inorganic layer composite, which is an intermediate for preparing the yolk-shell-structured silicon-carbon composite according to an embodiment of the present invention, the inorganic layer on the surface of the silicon particles serves as a sacrificial layer and is at least partially removed, preferably in an amount of 10 to 100 wt%, and more preferably 50 to 100 wt%, during the etching step to be described later, thereby forming a void between the silicon particles and the carbon thin film.

In the yolk-shell-structured silicon-carbon composite according to an embodiment of the present invention, the void present between the silicon particles and the carbon thin film can accommodate the volume expansion of silicon when the yolk-shell-structured silicon-carbon composite is used as an anode active material, thereby suppressing the peeling off of the outermost carbon thin film caused by such expansion.

The yolk-shell-structured silicon-carbon composite according to an embodiment of the present invention may have a porosity of 10% to 80%, preferably 10% to 50%, and more preferably 20% to 50%. Here, the porosity may be measured by the Brunauer-Emmett-Teller (BET) method, but is not particularly limited thereto. As the yolk-shell-structured silicon-carbon composite satisfies the above porosity range, it may be more advantageous in achieving the objectives of the present invention.

### Method for Preparing Yolk-Shell-Structured Silicon-Carbon Composite

The yolk-shell-structured silicon-carbon composite according to an embodiment of the present invention is prepared by a method comprising: (1) supplying silicon particles into a reactor; (2) forming an inorganic layer on the silicon particles by atomic layer deposition (ALD) to prepare a silicon-inorganic layer composite; (3) forming a carbon thin film on the silicon-inorganic layer composite to obtain a silicon-inorganic layer-carbon composite; and (4) removing at least a portion of the inorganic layer from the silicon-inorganic layer-carbon composite to produce the yolk-shell-structured silicon-carbon composite.

Atomic layer deposition (ALD) refers to a deposition method for growing thin films in units of atomic layers. In a typical chemical vapor deposition (CVD) method, reactants are introduced simultaneously, and both gas-phase reactions and surface reactions occur concurrently. In contrast, atomic layer deposition (ALD) suppresses gas-phase reactions by introducing the reactants sequentially, and deposition proceeds through surface reactions based on self-limited adsorption on the target surface to be deposited. Since the total thickness of the deposited film is controlled by the number of deposition cycles, ALD has the advantage of enabling easy thickness control at the atomic layer level. In addition, due to its excellent properties such as compatibility with various materials, good thin film characteristics, and processability at relatively low temperatures, ALD has been mainly applied to semiconductor dielectrics, magnetic materials, and the like. With recent advances in nanotechnology, atomic layer deposition of inorganic materials is expanding beyond its traditional focus on integrated circuit devices and is now being applied in a wide range of fields.

Hereinafter, a step-by-step description will be given of the method for preparing the yolk-shell-structured silicon-carbon composite using atomic layer deposition (ALD).

### Step (1)

In step (1), silicon particles are supplied into a reactor.

The specific details of the silicon particles used in step (1) are as described above in the section on the yolk-shell-structured silicon-carbon composite.

In the method for preparing a yolk-shell-structured silicon-carbon composite according to an embodiment of the present invention, the structure of the reactor is not particularly limited as long as it is capable of forming an inorganic layer on the surface of silicon particles using atomic layer deposition (ALD).

### Step (2)

In step (2), an inorganic layer is formed on the silicon particles by atomic layer deposition (ALD) to prepare a silicon-inorganic layer composite.

In this case, step (2) may include: (2-1) supplying a first precursor into the reactor to form a first precursor multilayer in which at least a portion of the first precursor is adsorbed on the silicon particles; (2-2) purging the inside of the reactor to remove unadsorbed first precursor from the first precursor multilayer, thereby forming a first precursor monolayer; (2-3) supplying a second precursor into the reactor to form a composite layer by reacting the first precursor monolayer with at least a portion of the second precursor; and (2-4) purging the inside of the reactor to remove unreacted second precursor from the composite layer, thereby forming an inorganic layer, wherein the steps (2-1) to (2-4) constitute one cycle, and one or more of such cycles may be performed.

First, in step (2-1), a first precursor is supplied into the reactor to form a first precursor multilayer in which at least a portion of the first precursor is adsorbed on the silicon particles.

In a specific embodiment of the present invention, the first precursor may include at least one selected from the group consisting of trimethylaluminum, diethylzinc, zinc acetate, tetrakis(dimethylamino)tin(IV), butoxytris(ethylmethylamido)hafnium, titanium isopropoxide, and diisopropylaminosilane. In a preferred specific embodiment of the present invention, the first precursor may include trimethylaluminum.

In a specific embodiment of the present invention, the supply time of the first precursor may be from 1 to 600 seconds. In a preferred specific embodiment of the present invention, the supply time of the first precursor may be 1 second or more, 2 seconds or more, 5 seconds or more, 10 seconds or more, or 15 seconds or more, and 600 seconds or less, 300 seconds or less, 100 seconds or less, 50 seconds or less, or 20 seconds or less. When the supply time of the first precursor falls within the above range, a layer of the first precursor can be appropriately formed on the silicon particles. However, if the supply time of the first precursor is less than 1 second, it may be difficult to form an inorganic layer with uniform thickness due to incomplete atomic layer deposition, and if the supply time exceeds 600 seconds, the inorganic layer may become excessively thick and the purging time may also increase, resulting in an overall increase in process time.

Next, in step (2-2), the supply of the first precursor is stopped, and the inside of the reactor is purged to remove unadsorbed first precursor from the first precursor multilayer, thereby forming a first precursor monolayer.

In a specific embodiment of the present invention, step (2-2) may be performed by purging with an inert gas, and the inert gas may include nitrogen (N₂) or argon (Ar).

In a specific embodiment of the present invention, the purging time in step (2-2) may be from 1 to 300 seconds. In a preferred specific embodiment of the present invention, the purging time may be 1 second or more, 2 seconds or more, 5 seconds or more, 10 seconds or more, or 15 seconds or more, and 300 seconds or less, 200 seconds or less, 100 seconds or less, 50 seconds or less, or 20 seconds or less. If the purging time is too short, residues of the first precursor may remain, resulting in the formation of an inorganic oxide thin film that is thicker than intended. On the other hand, if the purging time is too long, the process efficiency may be reduced.

Next, in step (2-3), a second precursor is supplied into the reactor to react the first precursor monolayer at least a portion of the second precursor, thereby forming a composite layer.

In a specific embodiment of the present invention, the second precursor may include at least one selected from the group consisting of H₂O, O₃, H₂O plasma, O₃ plasma, and O₂ plasma. In a preferred specific embodiment of the present invention, the second precursor may include H₂O.

The layer of the first precursor and the second precursor may react to form an inorganic layer on the particles, wherein the inorganic layer includes at least one selected from the group consisting of aluminum oxide (Al₂O₃), zinc oxide (ZnO), tinoxide (SnO₂), hafniumoxide (HfO), zirconiumoxide (ZrO₂), titaniumoxide (TiO₂), and silicon oxide (SiO₂).

In a specific embodiment of the present invention, the supply time of the second precursor may be from 1 to 600 seconds. In a preferred specific embodiment of the present invention, the supply time of the second precursor may be 1 second or more, 2 seconds or more, 5 seconds or more, 10 seconds or more, or 15 seconds or more, and 600 seconds or less, 300 seconds or less, 100 seconds or less, 50 seconds or less, or 20 seconds or less. When the supply time of the second precursor falls within the above range, an inorganic layer can be appropriately formed on the silicon particles. However, if the supply time of the second precursor is less than 1 second, it may be difficult to form an inorganic layer with uniform thickness due to incomplete atomic layer deposition, and if the supply time exceeds 600 seconds, the inorganic layer may become excessively thick and the purging time may also increase, resulting in an overall increase in process time.

Next, in step (2-4), the supply of the second precursor is stopped, and the inside of the reactor is purged to remove unreacted second precursor from the composite layer, thereby forming an inorganic layer.

In a specific embodiment of the present invention, step (2-4) may be performed by purging with an inert gas, and the inert gas may include nitrogen (N₂) or argon (Ar).

In a specific embodiment of the present invention, the purging time in step (2-4) may be from 1 to 300 seconds. In a preferred specific embodiment of the present invention, the purging time may be 1 second or more, 2 seconds or more, 5 seconds or more, 10 seconds or more, or 15 seconds or more, and 300 seconds or less, 200 seconds or less, 100 seconds or less, 50 seconds or less, or 20 seconds or less. If the purging time is too short, residues of the second precursor may remain, resulting in the formation of an inorganic oxide thin film that is thicker than intended. On the other hand, if the purging time is too long, the process efficiency may be reduced.

In a specific embodiment of the present invention, the temperature of the silicon particles during the above-described cycle may be maintained at 90 to 400°C. In a preferred specific embodiment of the present invention, the temperature of the silicon particles during the above cycle may be maintained at 120 to 300°C. If the temperature of the silicon particles is below 90°C, defects may occur in the formed inorganic layer due to incomplete reactions, and if the temperature exceeds 400°C, there may be a problem of excessive formation of the inorganic thin film on the silicon particles.

In a specific embodiment of the present invention, the above cycle may be performed under a pressure of 0.5 to 10 Torr. In a preferred specific embodiment of the present invention, the above cycle may be performed under a pressure of 1 to 5 Torr.

In a specific embodiment of the present invention, the above cycle may be repeated 1 to 300 times. In a preferred specific embodiment of the present invention, the above cycle may be repeated 50 to 300 times. If the cycle is performed more than 300 times, an excessive inorganic thin film may be formed on the silicon particles, and the process time may become prolonged.

### Step (3)

In step (3), a carbon thin film is formed on the silicon-inorganic layer composite to obtain a silicon-inorganic layer-carbon composite.

The step of forming a carbon thin film on the particles of the silicon-inorganic layer composite, which is an intermediate, may be performed using devices and methods known in the technical field of the present invention, such as chemical pyrolysis deposition, but is not particularly limited thereto. For example, the carbon thin film may be formed by carbonizing a polymer thin film formed by initiator-based chemical vapor deposition (iCVD).

In a specific embodiment of the present invention, the step of forming a carbon thin film on the silicon-inorganic layer composite, which is an intermediate, may be performed by heat-treating the silicon-inorganic layer composite, which is an intermediate, at a temperature of 400 to 1,400°C in the presence of a gaseous carbon source.

In a preferred embodiment of the present invention, the carbon source may include at least one selected from the group consisting of methane, ethane, propane, butane, methanol, ethanol, propanol, propanediol, butanediol, ethylene, propylene, butylene, butadiene, cyclopentene, acetylene, benzene, toluene, xylene, ethylbenzene, naphthalene, anthracene, and dibutylhydroxytoluene, but is not particularly limited thereto.

The step of forming a carbon thin film on the silicon-inorganic layer composite, which is an intermediate, may be performed in the presence of at least one inert gas selected from the group consisting of hydrogen, nitrogen, helium, and argon, in addition to the above carbon sources.

The reaction time (heat treatment time) for forming the carbon thin film can be appropriately adjusted depending on the heat treatment temperature, the pressure during heat treatment, the composition of the gas mixture, and the desired amount of carbon coating. For example, the reaction time may be from 10 minutes to 100 hours, specifically from 30 minutes to 90 hours, and more specifically from 50 minutes to 40 hours, but is not particularly limited to these ranges.

In a specific embodiment of the present invention, the step of forming a carbon thin film on the silicon-inorganic layer composite, which is an intermediate, may be performed by mixing the silicon-inorganic layer composite with a solution in which a carbon source is dispersed in a solvent as needed, followed by drying and heat treatment at a temperature of 400 to 1,400°C.

In a preferred embodiment of the present invention, the carbon source may be selected from the group consisting of pitch, hydrocarbon-based substances, and petroleum-based substances. More specifically, the pitch may be petroleum-based pitch, coal-based pitch, or a mixture thereof; the hydrocarbon-based substance may be furfuryl alcohol or a phenolic resin; and the petroleum-based substance may be pyrolysis fuel oil (PFO), naphtha cracking bottom oil (NCB), ethylene cracker bottom oil (EBO), vacuum residue (VR), de-asphalted oil (DAO), atmospheric residue (AR), fluid catalytic cracking decant oil (FCC-DO), residue fluid catalytic cracking decant oil (RFCC-D0), or heavy aromatic oil. The solvent may be tetrahydrofuran (THF) or an alcohol.

In addition, when the carbon thin film is formed by carbonization of a polymer thin film, a polymer thin film may be formed by polymerizing a monomer - a volatile substance capable of forming a polymer when activated by an initiator - through activation by the initiator, and the formed polymer thin film may then be carbonized.

In this case, the monomer may be one or more of vinyl or acrylate monomers comprising at least one of a siloxane group, an amine group, a fluorine group, and an aromatic hydrocarbon group.

The polymer thin film formed by polymerizing the monomer may be, for example, be polymerized from at least one monomer selected from the group consisting of: 4-vinyl pyridine (4VP); 2,4,6,8-tetramethyl-2,4,6,8-tetravinylcyclotetrasiloxane; 3,3,4,4,5,5,6,6,7,7,8,8,9,9,10,10,10-heptadecafluorodecyl methacrylate (PFDMA); 1,3,5,7-tetravinyl-1,3,5,7-tetramethylcyclotetrasiloxane (V4D4); 1,3,5-trimethyl-1,3,5-trivinylcyclotrisiloxane (V3D3); hexavinyldisiloxane (HVDS); glycidyl methacrylate; divinylbenzene; diethyleneglycol divinyl ether; diethyleneglycol diacrylate (DEGDA); ethylene glycol dimethacrylate; dimethylaminoethyl methacrylate; methacrylic acid; 1,3-diethenyl-1,1,3,3-tetramethyldisiloxane; 1H,1H,2H,2H-perfluorodecyl acrylate; perfluorodecyl methacrylate; dodecafluoroheptyl acrylate; pentafluorophenyl methacrylate; 3,3,4,4,5,5,6,6,7,7,8,8,9,9,9-pentadecafluorononyl acrylate; 2-methyl-3,3,4,4,5,5,6,6,7,7,8,8,9,9,9-pentadecafluorononyl acrylate; 3,3,4,4,5,5,6,6,7,7,8,8,8-tridecafluorooctyl acrylate; 2-methyl-3,3,4,4,5,5,6,6,7,7,8,8,8-tridecafluorooctyl acrylate; 3,3,4,4,5,5,6,6,7,7,7-undecafluoroheptyl acrylate; 2-methyl-3,3,4,4,5,5,6,6,7,7,7-undecafluoroheptyl acrylate; 3,3,4,4,5,5,6,6,6-nonafluorohexyl acrylate; 2-methyl-3,3,4,4,5,5,6,6,6-nonafluorohexyl acrylate; 3,3,4,4,5,5,6,6,7,7,8,8,9,9,10,10,11,11,11-nonadecafluoroundecyl acrylate; 2-methyl-3,3,4,4,5,5,6,6,7,7,8,8,9,9,10,10,11,11,11-nonadecafluoroundecyl acrylate; 3,3,4,4,5,5,6,6,7,7,8,8,9,9,10,10,11,11,12,12,12-heneicosafluorododecyl acrylate; 2-methyl-3,3,4,4,5,5,6,6,7,7,8,8,9,9,10,10,11,11,12,12,12-heneicosafluorodode cyl acrylate; 3,3,4,4,5,5,6,6,7,7,8,8,9,9,10,10,11,11,12,12,13,13,13-tricosafluorotridecyl acrylate; 2-methyl-3,3,4,4,5,5,6,6,7,7,8,8,9,9,10,10,11,11,12,12,13,13,13-tricosafluoro tridecyl acrylate; 3,3,4,4,5,5,6,6,7,7,8,8,9,9,10,10,11,11,12,12,13,13,14,14, 14-pentacosafluorot etradecyl acrylate; and 2-methyl-3,3,4,4,5,5,6,6,7,7,8,8,9,9,10,10,11,11,12,12,13,13,14,14,14-pentaco safluorotetradecyl acrylate; dimethylaminoethyl methacrylate, dimethylaminoethyl acrylate, diethylaminoethyl methacrylate, and diethylaminoethyl acrylate.

In addition, the initiator may be, for example, a peroxide. Specifically, the initiator may include at least one selected from the group consisting of di-t-butyl peroxide, t-butyl peroxybenzoate, benzoyl peroxide, methyl ethyl ketone peroxide, lauryl peroxide, and benzophenone, but is not limited thereto.

In this case, the flow rate of the monomer supplied into the reactor may be from 0.1 sccm to 10 sccm. Specifically, the monomer flow rate may be 0.1 sccm or more, or 0.2 sccm or more, and 10 sccm or less, 5 sccm or less, or 4 sccm or less.

In addition, the flow rate of the initiator supplied into the reactor may be from 0.1 sccm to 5 sccm. Specifically, the initiator flow rate may be 0.1 sccm or more and 5 sccm or less, 3 sccm or less, or 2 sccm or less.

In addition, the initiator may be activated through a predetermined heat treatment, which may be performed at a temperature of 135 to 350°C, preferably 140 to 340°C, and satisfying this temperature condition may be advantageous in terms of preventing changes in the properties of the reactants.

Meanwhile, it is preferable to maintain the surface temperature of the silicon-inorganic layer composite at a low level in order to increase the adsorption rate of the monomer and the free radicals. Specifically, the surface temperature of the silicon-inorganic layer composite is preferably in the range of 10 to 50°C, and more preferably in the range of 13 to 45°C, but is not particularly limited to these ranges.

### Step (4)

In step (4), at least a portion of the inorganic layer in the silicon-inorganic layer-carbon composite is removed to produce a yolk-shell-structured silicon-carbon composite.

In this case, step (4) may be performed by etching the inorganic layer from the silicon-inorganic layer-carbon composite. The etching may be performed by immersing the silicon-inorganic layer-carbon composite in an aqueous basic or acidic solution and treating it at a temperature of room temperature to 80°C for 1 minute to 1 hour.

In a specific embodiment of the present invention, the base may include at least one selected from the group consisting of sodium hydroxide (NaOH), potassium hydroxide (KOH), and calcium hydroxide (Ca(OH)₂), but is not particularly limited thereto. Here, the concentration of the basic aqueous solution may be from 0.1 to 3 M, although it is not particularly limited to this range.

In a specific embodiment of the present invention, the acid may include at least one selected from the group consisting of hydrofluoric acid (HF), hydrochloric acid, sulfuric acid, and nitric acid, but is not particularly limited thereto. Here, the concentration of the acidic aqueous solution may be from 0.1 to 2 M, although it is not particularly limited to this range.

By etching the silicon-inorganic layer-carbon composite as described above, at least a portion, preferably 10 to 100 wt%, and more preferably 50 to 100 wt% of the inorganic layer may be removed, thereby allowing an appropriate void to be formed between the silicon particles and the carbon thin film. The residues of the inorganic layer remaining after removal in step (4) may be present between the silicon particles and the carbon thin film in the final product, the yolk-shell-structured silicon-carbon composite, according to an embodiment of the present invention.

In step (4), when a void is formed between the silicon particles and the carbon thin film, the degree of void formation and the extent of remaining inorganic layer can be appropriately controlled by adjusting factors such as the size of the silicon particles, the etching time, and the temperature of the basic aqueous solution. When the resulting yolk-shell-structured silicon-carbon composite is used as an anode active material, the electrical conductivity of the anode active material can be improved without structural changes.

### Additional step(s)

In the method for preparing a yolk-shell-structured silicon-carbon composite according to an embodiment of the present invention, the resulting yolk-shell-structured silicon-carbon composite may be crushed or pulverized and classified. Through classification, the particle size distribution of the composite can be made uniform. The classification may be performed by dry classification, wet classification, or classification using a sieve.

### Anode active material

According to another embodiment of the present invention, an anode active material comprising the yolk-shell-structured silicon-carbon composite is provided.

The anode active material according to an embodiment of the present invention may further include a carbon-based anode material, specifically a graphite-based anode material, in addition to the yolk-shell-structured silicon-carbon composite. For example, the anode active material may be obtained by mixing the yolk-shell-structured silicon-carbon composite according to an embodiment of the present invention with a carbon-based anode material, such as a graphite-based anode material.

Here, the carbon-based anode material may include at least one selected from the group consisting of natural graphite, artificial graphite, soft carbon, hard carbon, mesocarbon, carbon fibers, carbon nanotubes, pyrolytic carbon, cokes, calcined products of organic polymer compounds, and carbon black, but is not particularly limited thereto.

The content of the carbon-based anode material in the anode active material according to an embodiment of the present invent ion may be 2 to 80 wt%, preferably 5 to 70 wt%, and more preferably 30 to 70 wt%, based on the total weight of the anode active material.

The anode active material according to an embodiment of the present invention can be effectively used for manufacturing anodes of secondary batteries, specifically anodes of lithium secondary batteries and all-solid-state batteries.

### All-solid-state battery

According to another embodiment of the present invention, an all-solid-state battery comprising an SEI (Solid Electrolyte Interphase) layer including the yolk-shell-structured silicon-carbon composite is provided.

The all-solid-state battery may be an all-solid-state battery including a cathode, an anode, and a solid electrolyte interposed between the cathode and the anode. The anode may include an anode active material layer, and the anode active material layer may include an SEI (Solid Electrolyte Interphase) layer comprising the above-described yolk-shell-structured silicon-carbon composite on at least a portion of the surface of the anode active material particles.

Meanwhile, the anode active material particles may be carbon-based anode materials, and in this case, the description may be the same as that provided above with respect to the anode active material; therefore, a detailed description thereof will be omitted.

In addition, aside from the anode active mater ial particles and the SEI layer of the all-solid-state battery, the anode configuration, cathode configuration, and solid electrolyte configuration may be based on those of known all-solid-state batteries, and thus are not particularly limited in the present invention.

### MODE FOR CARRYING OUT THE INVENTION

### Examples

The present invention will now be described in more detail with reference to the following examples. The following examples are provided merely for illustrative purposes and are not intended to limit the scope of the present invention.

### <Example 1>

### Preparation of Silicon-Inorganic Layer Composite (Intermediate)

A silicon-inorganic layer composite was prepared using a conventional ALD reactor. Silicon powders having average particle diameters of 20 µm and 2 µm, respectively, were each evenly spread and placed on a circular silicon wafer in the reactor in an amount of 5 g. A silicon-inorganic layer composite was prepared by forming an inorganic layer on the surface of the silicon particles under the following conditions. The specific materials and process conditions used in Example 1 are as follows.
- Silicon particles: average particle diameters of 20 µm and 2 µm (REC Silicon)
- First precursor: Trimethylaluminum (EG Chem)
- Second precursor: H₂O (Millpore, Milli-Q)
- Precursor carrier gas: N₂ 300 sccm
- Average flow rate and supply time of the first precursor: 2 seconds
- Purging gas and time after the supply of the first precursor: N₂, 60 seconds
- Average flow rate and supply time of the second precursor: 2 seconds
- Purging gas and time after the supply of the second precursor: N₂, 60 seconds
- Pressure inside the reactor chamber: 1.2 Torr
- Surface temperature of the mounting unit (silicon wafer) in the reactor: 150°C
- Number of cycles: 100 cycles
- Formed inorganic layer: Al₂O₃

### Test Example 1-1

### (1) X-ray Photoelectron Spectroscopy

Elemental analysis of the particle surfaces was performed using X-ray photoelectron spectroscopy (XPS) (Multilab 2000, Thermo) for the silicon particles before and after formation of the inorganic layer. The results are shown in Table 1.

**[Table 1]**

| Silicon Particle Diameter | | Carbon | Aluminum | Oxygen | Silicon |
|---|---|---|---|---|---|
| 20 *µ*m | Before formation of inorganic layer | 18.19 | 0 | 27.59 | 53.62 |
| | After formation of inorganic layer | 27.73 | 22.34 | 40.76 | 9.17 |
| 2 *µ*m | Before formation of inorganic layer | 41.38 | 0 | 27.63 | 30.98 |
| | After formation of inorganic layer | 34.15 | 24.64 | 40.17 | 1.05 |

As shown in Table 1, aluminum was hardly detected on the surface of the silicon particles before the formation of the inorganic layer, but after forming the inorganic layer on the silicon particles by the preparation method of the present invention, a significant amount of aluminum was detected. Accordingly, it can be confirmed that a silicon-inorganic layer composite, in which an inorganic layer of aluminum oxide is formed on the surface of the silicon particles, was prepared by the preparation method of the present invention.

### (2) Transmission Electron Microscopy-Energy Dispersive X-ray Spectroscopy (TEM-EDS)

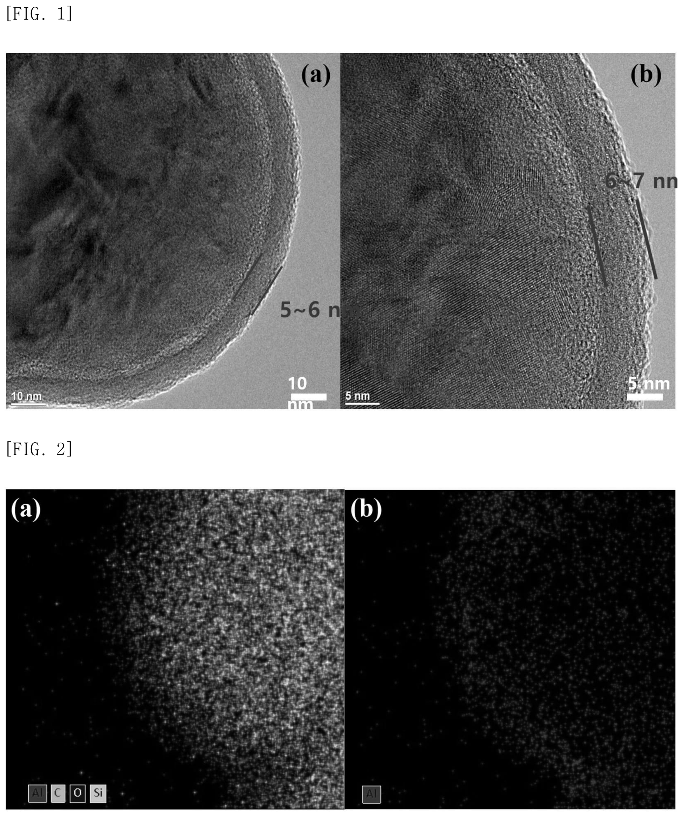

Silicon particles with an average particle diameter of 20 µm, on which an Al₂O₃ inorganic layer had been formed, were observed using a transmission electron microscope (TEM) and an energy dispersive spectrometer (EDS) (Tecnai G2 F30 S-Twin, FEI Company). The TEM analysis results are shown in FIG. 1, and the EDS analysis results are shown in FIG. 2 and Table 2.

**[Table 2]**

| | Atomic % |
|---|---|
| Si | 69.06 |
| C | 13.27 |
| F | 3.34 |
| Al | 14.33 |
| 0 | 69.06 |

From the TEM images of FIGs. 1A and 1B, it can be seen that the silicon-inorganic layer composite obtained in Example 1 substantially maintained its original shape without issues such as severe agglomeration or particle breakage, and that an inorganic layer with a uniform thickness of approximately 5 nm was formed. FIGs. 2A and 2B and Table 2 show the results of EDS analysis of the silicon-inorganic layer composite. As shown inFIGs. 2Aand2BandTable2, aluminum, a component of the inorganic layer, was observed on the silicon-inorganic layer composite. Therefore, it can be qualitatively confirmed that a silicon-inorganic layer composite in which an inorganic layer is formed on the surface of the silicon particles was prepared by the preparation method of the present invention.

### Preparation of Silicon-Inorganic Layer-Carbon Composite

5 g of the silicon-inorganic layer composite (intermediate) prepared above were evenly spread and placed on a circular silicon wafer in the reactor. Through the inlet, vaporized monomer and initiator were supplied into the reactor chamber to form a polymer thin film (pDVB) on the surface of the silicon-inorganic layer composite, thereby producing a silicon-inorganic layer-polymer composite. The specific materials and process conditions used in this example are as follows.
- Monomer: Divinylbenzene (Aldrich, 80%)
- Initiator: di-t-butyl peroxide (Aldrich, 98%)
- Average supply flow rate of initiator: 0.26 sccm
- Average supply flow rate of monomer: 0.425 sccm
- Filament temperature: 140°C
- Pressure inside the reactor chamber: 450 mTorr
- Surface temperature of the mounting unit (silicon wafer) in the reactor: 23°C

Subsequently, the silicon-inorganic layer-polymer composite was subjected to carbonization at 700°C for 30 minutes to carbonize the polymer thin film, thereby producing a silicon-inorganic layer-carbon composite.

### Test Example 1-2

### (1) Transmission Electron Microscopy-Energy Dispersive X-ray Spectroscopy (TEM-EDS)

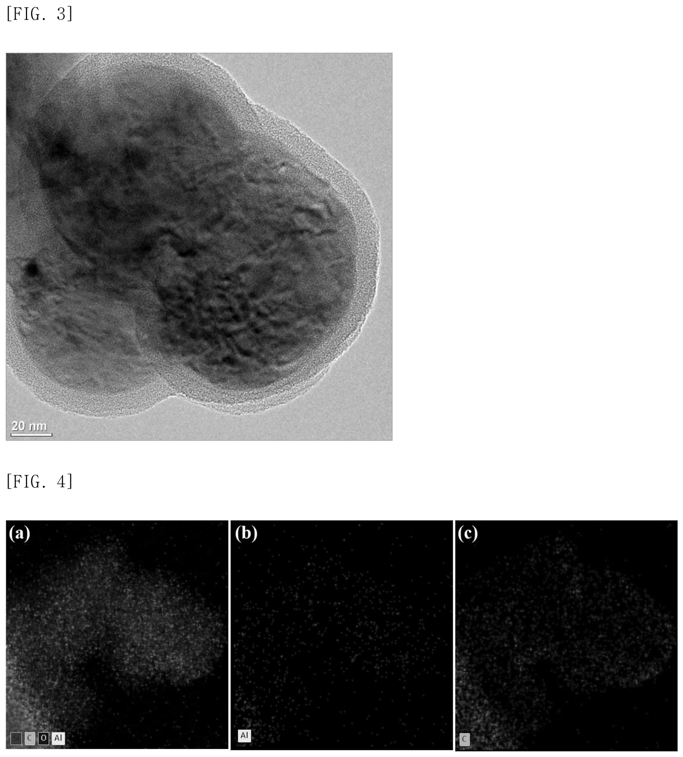

The silicon-inorganic layer-carbon composite prepared above was observed using a transmission electron microscope (TEM) and an energy dispersive spectrometer (EDS) (Tecnai G2 F30 S-Twin, FEI Company). The TEM analysis results are shown in FIG. 3, and the EDS analysis results are shown in FIG. 4.

As a result, from the TEM image in FIG. 3, it was confirmed that a uniform thin film with a thickness of approximately 20 nm was formed on the silicon particles in the silicon-inorganic layer-carbon composite obtained in the example. In addition, from the EDS analysis results shown in FIGs. 4A, 4B, and 4C, it was confirmed that both aluminum and carbon were observed uniformly across the regions of the silicon-inorganic layer-carbon composite. Therefore, it can be qualitatively confirmed that a silicon-inorganic layer-carbon composite, in which an inorganic layer and a carbon thin film are formed on the surface of the silicon particles, was prepared by the preparation method of the present invention.

### Preparation of Yolk-Shell-Structured Silicon-Carbon Composite

The silicon-inorganic layer-carbon composite (intermediate) prepared above was immersed in H₃PO₄ (85%, Aldrich) at 50°C for 100 seconds to etch the inorganic layer, thereby producing a yolk-shell-structured silicon-carbon composite.

### Test Example 1-3

### (1) Transmission Electron Microscopy-Energy Dispersive X-ray Spectroscopy (TEM-EDS)

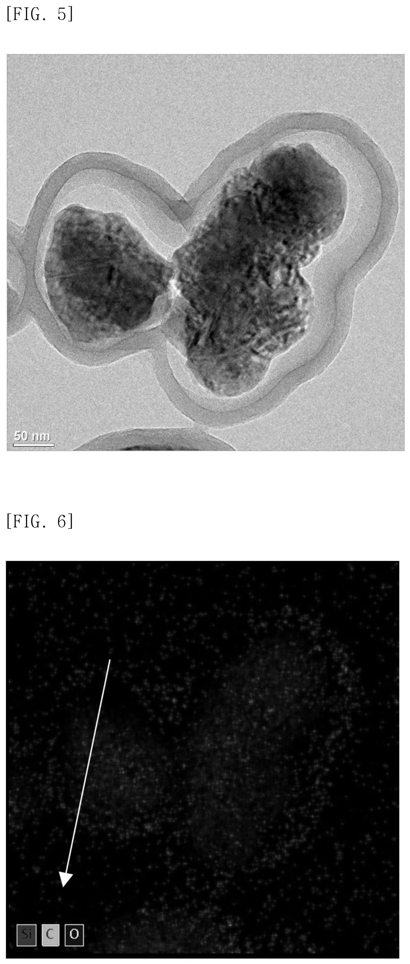

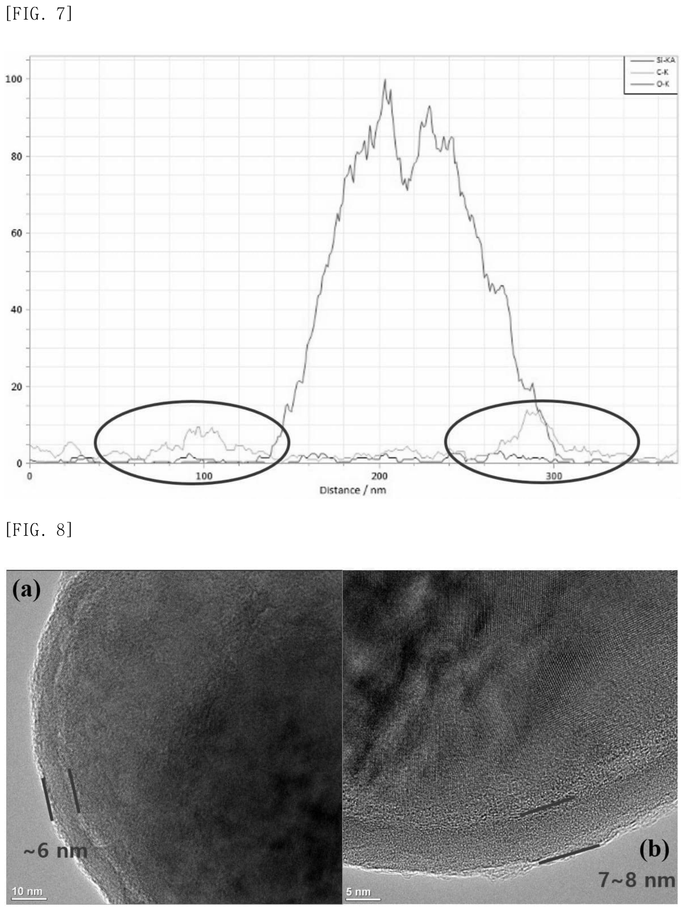

The yolk-shell-structured silicon-carbon composite prepared above was observed using a transmission electron microscope (TEM) and an energy dispersive spectrometer (EDS) (Tecnai G2 F30 S-Twin, FEI Company). The TEM analysis results are shown in FIG. 5, and the EDS analysis results are shown in FIGs. 6 and 7.

As a result, from the TEM image in FIG. 5, it was confirmed that the silicon-carbon composite was formed with a yolk-shell structure having a uniform void. In addition, based on the results of FIGs. 6 and 7, it was confirmed that a carbon thin film was formed on the silicon particles, and particularly from FIG. 7, the presence of a defined void was formed, as evidenced by the existence of a region (around 110 nm) where no atoms were detected between the regions where carbon and silicon atoms were detected.

### <Example 2>

### Preparation of Silicon-Inorganic Layer Composite (Intermediate)

A silicon-inorganic layer composite was prepared in the same manner as in Example 1, except that the following conditions were changed.
- Silicon particles: average particle diameter of 20 µm (REC Silicon)
- First precursor: Titanium(IV) isopropoxide (TTIP)
- Second precursor: H₂O (Millpore, Milli-Q)
- Precursor carrier gas: N₂ 300 sccm
- Average flow rate and supply time of the first precursor: 15 seconds
- Purging gas and time after the supply of the first precursor: N₂, 600 seconds
- Average flow rate and supply time of the second precursor: 15 seconds
- Purging gas and time after the supply of the second precursor: N₂, 600 seconds
- Pressure inside the reactor chamber: 1.2 Torr
- Surface temperature of the mounting unit (silicon wafer) in the reactor: 150°C
- Number of cycles: 100 cycles
- Formed inorganic layer: TiO₂

### Test Example 2

### (1) Transmission Electron Microscopy Analysis

Transmission electron microscopy (TEM) analysis was performed on the silicon particles on which a TiO₂ inorganic layer had been formed. The TEM analysis results are shown in FIG. 8.

From the TEM images of FIGs. 8A and 8B, it can be seen that the silicon-inorganic layer composite obtained in Example 2 substantially maintained its original shape without issues such as severe agglomeration or particle breakage, and that an inorganic layer with a uniform thickness of approximately 6 nm was formed.

## Claims

1. A method for preparing a yolk-shell-structured silicon-carbon composite, the method comprising:
(1) supplying silicon particles into a reactor;
(2) forming an inorganic layer on the silicon particles by atomic layer deposition (ALD) to prepare a silicon-inorganic layer composite;
(3) forming a carbon thin film on the silicon-inorganic layer composite to obtain a silicon-inorganic layer-carbon composite; and
(4) removing at least a portion of the inorganic layer from the silicon-inorganic layer-carbon composite to produce a yolk-shell-structured silicon-carbon composite.

2. The method of claim 1, wherein step (2) comprises:
(2-1) supplying a first precursor into the reactor to form a first precursor multilayer in which at least a portion of the first precursor is adsorbed on the silicon particles;
(2-2) purging the inside of the reactor to remove unadsorbed first precursor from the first precursor multilayer to form a first precursor monolayer;
(2-3) supplying a second precursor into the reactor to react at least a portion of the second precursor with the first precursor monolayer to form a composite layer; and
(2-4) purging the inside of the reactor to remove unreacted second precursor from the composite layer, thereby forming an inorganic layer,
wherein steps (2-1) to (2-4) constitute one cycle, and the cycle is performed one or more times.

3. The method of claim 2, wherein the supply time of the first precursor and the supply time of the second precursor are each independently from 1 to 600 seconds.

4. The method of claim 2, wherein the first precursor comprises at least one selected from the group consisting of trimethylaluminum, diethylzinc, zinc acetate, tetrakis(dimethylamino)tin(IV), butoxytris(ethylmethylamido)hafnium, titanium isopropoxide, and diisopropylaminosilane.

5. The method of claim 2, wherein the second precursor comprises at least one selected from the group consisting of H₂O, O₃, H₂O plasma, O₃ plasma, and O₂ plasma.

6. The method of claim 2, wherein the gas used for purging in at least one of steps (2-2) and (2-4) comprises nitrogen (N₂) or argon (Ar).

7. The method of claim 2, wherein the cycle is performed from 1 to 300 cycles.

8. The method of claim 2, wherein the temperature of the silicon particles is maintained at 90 to 400°C during the cycle.

9. The method of claim 1, wherein step (4) is performed by etching the inorganic layer from the silicon-inorganic layer-carbon composite.

10. A yolk-shell-structured silicon-carbon composite, comprising:
silicon particles; and
a carbon thin film formed on the silicon particles with a predetermined void therebetween.

11. The yolk-shell-structured silicon-carbon composite of claim 10,
wherein the silicon particles have an average particle diameter of 10 nm to 50 µm, and
the carbon thin film has an average thickness of 1 nm to 1 µm.

12. The yolk-shell-structured silicon-carbon composite of claim 10, wherein the yolk-shell-structured silicon-carbon composite has a porosity of 10 to 80%.

13. An anode active material comprising the yolk-shell-structured silicon-carbon composite according to any one of claims 10 to 12.

14. An all-solid-state battery comprising a solid electrolyte interphase (SEI) film comprising the yolk-shell-structured silicon-carbon composite according to any one of claims 10 to 12.
